# EUROPEAN PATENT APPLICATION

(11) **EP 4 632 827 A2**
(43) Date of publication of application: **15.10.2025**
(21) Application number: 25165667.4
(22) Date of filing: 24.03.2025
(51) Int. Cl.: H01M 4/04, H01M 10/04, B26D 1/00, B26D 7/01, B30B 11/00, H01G 13/00

(54) **APPARATUS FOR MANUFACTURING DRY ELECTRODE**

(30) Priority: 09.04.2024 KR 20240048179
(71) Applicant: SAMSUNG SDI CO., LTD., Yongin-si, Gyeonggi-do 17084 (KR)
(72) Inventor: LEE, Dongsub, Yongin-si, Gyeonggi-do 17084 (KR); KIM, Gisung, Yongin-si, Gyeonggi-do 17084 (KR); KIM, Sohun, Yongin-si, Gyeonggi-do 17084 (KR); PARK, Joonkoo, Yongin-si, Gyeonggi-do 17084 (KR); PARK, Jin Seo, Yongin-si, Gyeonggi-do 17084 (KR); SEO, Wonsub, Yongin-si, Gyeonggi-do 17084 (KR); CHOI, Kyungtaek, Yongin-si, Gyeonggi-do 17084 (KR); PYO, Young-Hak, Yongin-si, Gyeonggi-do 17084 (KR)
(74) Representative: Marks & Clerk LLP

(57) **Abstract**

A dry electrode manufacturing apparatus includes a plurality of rollers that laminate fine powder onto a current collector by calendaring the fine powder into a free standing film. A plurality of trimming knives adjust a film width of the free standing film passing by at least one roller among the plurality of rollers. A vision portion photographs a surface of the current collector on which the free standing film is laminated. A controller controls positions of the trimming knives based on the film width of the free standing film laminated onto the surface of the current collector.

## Description

### BACKGROUND

### (a) Field

The present disclosure relates to a dry electrode manufacturing apparatus.

### (b) Description of the Related Art

In general, a rechargeable battery is a battery capable of being discharged and recharged.

There is an increasing need for a dry electrode manufacturing apparatus that manufactures dry electrodes for rechargeable batteries without using solvents.

A conventional dry electrode manufacturing apparatus may manufacture a dry electrode by calendaring fine powder containing active material, conductive material, and binder into a free-standing film using a calendaring roll, and then laminating the free-standing film on a current collector. As the dry electrode manufacturing apparatus manufactures a dry electrode by continuously laminating a free-standing film on a current collector, it is necessary to control a width of the free-standing film laminated on the current collector.

### SUMMARY

An embodiment provides a dry electrode manufacturing apparatus that can improve the quality of a dry electrode by controlling a width, a position, and/or alignment of a free standing film laminated onto a current collector in real-time and also improve the stability of the dry electrode manufacturing process.

One aspect provides a dry electrode manufacturing apparatus including: a plurality of first rollers configured to calender a first fine powder into a first free standing film; a first laminating roller that is positioned adjacent to the plurality of first rollers in a first direction and is configured to laminate the first free standing film onto a first side of a current collector; a plurality of first trimming knives that are moveable in a second direction crossing the first direction and configured to adjust a first film width in the second direction of the first free standing film that passes by the first laminating roller in the first direction; a first vision portion that photographs the first side of the current collector, on which the first free standing film is laminated; and a controller that is connected to the first vision portion and the first trimming knives, the controller being configured to control positions of the first trimming knives in the second direction based on the first film width of the first free standing film laminated onto the side of the current collector.

The plurality of first trimming knives may include n first trimming knives spaced apart in the second direction, and the first trimming knives are configured to cut the first free standing film into n/2 rows spaced apart in the second direction.

The plurality of first trimming knives may include four first trimming knives.

The controller may control positions of the plurality of first trimming knives in the second direction based on a width of a first uncoated portion in the second direction of the current collector, which is not provided with the first free standing film, and the width of the first free standing film.

The dry electrode manufacturing apparatus may further include a first suction portion that is positioned adjacent to the first trimming knives and is configured to suction material separated from the first free standing film by the plurality of first trimming knives.

The first suction portion may be disposed at a rear end in the first direction from the plurality of first trimming knives.

The dry electrode manufacturing apparatus may further include a first feeder configured to supply the first fine powder to the plurality of first rollers.

The dry electrode manufacturing apparatus may further include: a plurality of second rollers configured to calender a second fine powder into a second free standing film; a second laminating roller positioned between the plurality of second rollers and the first laminating roller and configured to laminate the second free standing film onto a second side of the current collector; a plurality of second trimming knives that are moveable in the second direction and are configured to adjust a second film width in the second direction of the second free standing film passing by the second laminating roller in the first direction; and a second vision portion that photographs the second side of the current collector, on which the second free standing film is laminated, wherein the controller may be connected to the second vision portion and configured to control positions of the second trimming knives in the second direction based on the second film width of the second free standing film laminated onto the second side of the current collector.

The controller may be configured to control positions of the first trimming knives in the second direction and positions of the second trimming knives in the second direction based on a first uncoated portion width in the second direction of the current collector, the first uncoated portion not being provided with the first free standing film, the first film width, a second uncoated portion width in the second direction of the current collector, the second uncoated portion not being provided with the second free standing film, and the second film width.

The dry electrode manufacturing apparatus may further include a second suction portion that is positioned adjacent to the second trimming knives and configured to suction a material separated from the second free standing film by the plurality of second trimming knives.

The second suction portion may be positioned at a rear end in the first direction from the plurality of second trimming knives.

The dry electrode manufacturing apparatus may further include a plurality of third trimming knives that are moveable in the second direction adjacent to a first roller that is adjacent to the first laminating roller among the plurality of first rollers, and the third trimming knives may be configured to adjust the first film width in the second direction of the first free standing film passing by the roller in the first direction.

The controller may be connected to the plurality of third trimming knives and configured to control positions of the third trimming knives in the second direction based on the first film width of the first free standing film laminated on the first side of the current collector.

The dry electrode manufacturing apparatus may further include a third suction portion that is positioned adjacent to the third trimming knives and is configured to suction material separated from the first free standing film by the third trimming knives.

The third suction portion may be positioned at the rear end in the first direction from the plurality of third trimming knives between the plurality of third trimming knives and the plurality of first trimming knives.

The dry electrode manufacturing apparatus may further include a plurality of fourth trimming knives that are moveable in the second direction adjacent to a second roller that is adjacent to the second laminating roller among the plurality of second rollers, and the fourth trimming knives may be configured to adjust the second film width in the second direction of the second free standing film passing by the second roller in the first direction.

The controller may be connected to the plurality of fourth trimming knives and is configured to control positions of the fourth trimming knives in the second direction based on the second film width of the second free standing film laminated onto the second side of the current collector.

The dry electrode manufacturing apparatus may further include a fourth suction portion that is positioned adjacent to the fourth trimming knives and is configured to suction material separated from the second free standing film by the fourth trimming knives.

The dry electrode manufacturing apparatus may further include a second feeder configured to supply the second fine powder to the plurality of second rollers.

In addition, one aspect provides a dry electrode manufacturing apparatus including: a plurality of rollers arranged in a first direction and configured to laminate fine powder by calendaring the fine power into a free standing film; a plurality of trimming knives that are moveable in a second direction crossing the first direction and configured to adjust a film width in the second direction of the free standing film passing by the roller in the first direction; a vision portion configured to photograph a surface of the current collector on which the free standing film is laminated; and a controller that is connected to the vision portion and the plurality of trimming knives and is configured to controls positions of the trimming knives in the second direction based on a film width of the free standing film laminated onto the surface of the current collector.

According to an embodiment, the dry electrode manufacturing apparatus improves the quality of the dry electrode by controlling the width, position, and/or alignment of the free standing film laminated onto the current collector in real-time and improves the stability of the dry electrode manufacturing process.

At least some of the above and other features of the invention are set out in the claims.

### BRIEF DESCRIPTION OF THE DRAWINGS

FIG. 1 is a side view of a dry electrode manufacturing apparatus according to an embodiment.
FIG. 2 is a front view of plurality of first trimming knives and the first suction portion disposed on the first laminating roller of the dry electrode manufacturing apparatus according to an embodiment.
FIG. 3 shows an example of controlling the plurality of first trimming knives by the controller of the dry electrode manufacturing apparatus according to an embodiment.
FIG. 4 shows an example in which the controller of the dry electrode manufacturing apparatus according to an embodiment controls the plurality of first trimming knives.
FIG. 5 is a side view of a dry electrode manufacturing apparatus according to another embodiment.
FIG. 6 is a side view of a dry electrode manufacturing apparatus according to another embodiment.

### DETAILED DESCRIPTION OF THE EMBODIMENTS

The present disclosure will be described more fully hereinafter with reference to the accompanying drawings in which embodiments of the disclosure are shown. As those skilled in the art would realize, the described embodiments may be modified in various ways without departing from the scope of the present disclosure.

In addition, unless explicitly described to the contrary, the word "comprise", and variations such as "comprises" or "comprising", will be understood to imply the inclusion of stated elements but not the exclusion of any other elements.

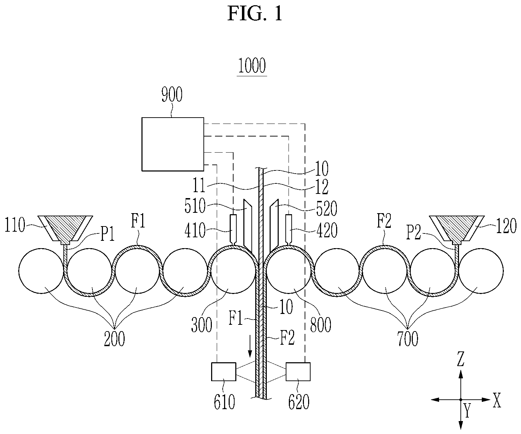

Hereinafter, a dry electrode manufacturing apparatus according to an embodiment will be described with reference to FIG. 1 to FIG. 4.

A dry electrode manufacturing apparatus according to an embodiment may be an apparatus for manufacturing a dry electrode for a rechargeable battery, but the present disclosure is not limited thereto and other embodiments may be directed to an apparatus for manufacturing various known dry electrodes.

FIG. 1 is a side view of a dry electrode manufacturing apparatus according to an embodiment.

Referring to FIG. 1, a dry electrode manufacturing apparatus 1000 according to an embodiment includes a first feeder 110, a second feeder 120, a first roller 200, a first laminating roller 300, a first trimming knife 410, a second trimming knife 420, a first suction portion 510, a second suction portion 520, a first vision portion 610, a second vision portion 620, a second roller 700, a second laminating roller 800, and a controller 900.

The first feeder 110 supplies first fine powder P1. The first feeder 110 supplies the first fine powder P1 to the first roller 200. The first fine powder P1 may include various known active materials, conductive materials, and binders. For example, the first fine powder P1 may include a metal oxide, a conductive material such as carbon black, and a binder such as polytetrafluoroethylene (PTFE), but the present disclosure is not limited to such examples. The first fine powder P1 may be formed by mixing the active material, conductive material, and binder into a mixture using various known mixing means and fibrillizing the mixture into fiberized dry powder using various known fiberizing means, but the present disclosure is not restricted in this regard.

The first feeder 110 may include various known storage means for storing the first fine powder P1 and various known discharge means for supplying the first fine powder P1 to the first roller 200. The first fine powder P1 supplied from the first feeder 110 to the first roller 200 may be calendered into the first free standing film F1.

The second feeder 120 supplies second fine powder P2. The second feeder 120 supplies the second fine powder P2 to the second roller 700. The second fine powder P2 may include various known active materials, conductive materials, and binders. For example, the second fine powder P2 may include a metal oxide, a conductive material such as carbon black, and a binder such as PTFE, but the present disclosure is not limited to such examples. The second fine powder P2 may be formed by mixing the active material, conductive material, and binder into a mixture using various known mixing means and fibrillizing the mixture into fiberized dry powder using various known fiberizing means, but the present disclosure is not restricted in this regard.

The second feeder 120 may include various known storage means for storing the second fine powder P2 and various known discharge means for supplying the second fine powder P2 to the second roller 700. The second fine powder P2 supplied from the second feeder 120 to the second roller 700 may be calendered into the second free standing film F2.

The first roller 200 includes a plurality of first rollers 200. The plurality of first rollers 200 calender the first fine powder P1 supplied from the first feeder 110 into the first free standing film F1. The plurality of first rollers 200 are arranged in a first direction (X), and the first fine powder P1 is supplied between the plurality of first rollers 200 so as to be calendered into the first free standing film F1. For example, the plurality of first rollers 200 may calender the first fine powder P1 into the first free standing film F1 by rolling and stretching the first fine powder P1, but the present disclosure is not limited thereto. Each of the plurality of first rollers 200 may rotate at the same angular speed or may rotate at different angular speeds. Moving in the first direction (X) toward where the current collector 10 is positioned, each of the plurality of first rollers 200 may rotate at a gradually faster angular speed or gradually at a slower angular speed. Among the plurality of first rollers 200, a first laminating roller 300 is disposed adjacent to the roller of the first roller 200 which is positioned at the end of the first direction (X).

The first laminating roller 300 is adjacent to the plurality of first rollers 200 in the first direction (X). The first laminating roller 300 laminates the first free standing film F1 calendared by the plurality of first rollers 200 onto a first side 11 of the current collector 10. The first laminating roller 300 may include, but is not limited to, various known laminating means.

The current collector 10 may move in a third direction (Z) that intersects the first direction (X) between the first laminating roller 300 and the second laminating roller 800. Here, the first direction (X) may include, but is not limited to, the horizontal direction. The third direction (Z) may include, but is not limited to, the vertical direction. The second direction (Y) intersects the first direction (X) and the third direction (Z), and the second direction (Y) may intersect the first direction (X) in the horizontal direction. The second direction (Y) may be perpendicular to the first direction (X), but the present disclosure is not limited to such an orientation.

The first trimming knife 410 is disposed adjacent to the first laminating roller 300. The first trimming knife 410 may adjust a first film width in the second direction Y of the first free standing film F1 as it moves by the first laminating roller 300.

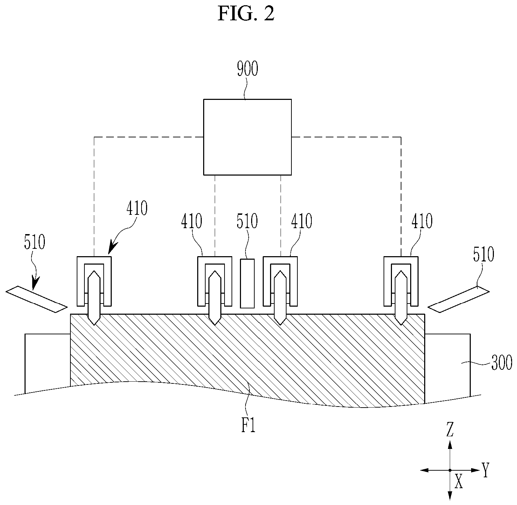

FIG. 2 is a front view of plurality of first trimming knives and a first suction portion disposed adjacent to the first laminating roller of the dry electrode manufacturing apparatus according to an embodiment.

Referring to FIG. 2 and FIG. 1, the first trimming knife includes a plurality of first trimming knives 410.

The plurality of first trimming knives 410 include four first trimming knives 410, but the present disclosure is not limited in this regard and may include two first trimming knives 410 or six or more first trimming knives 410. The plurality of first trimming knives 410 may include an even number of first trimming knives 410. The plurality of first trimming knives 410 includes n first trimming knives 410 spaced apart in the second direction (Y) that is an axial direction of the first laminating roller 300. The first free standing film F1 that is adjusted by the n first trimming knives 410 while passing by the first laminating roller 300 into n/2 rows that are spaced apart in the second direction (Y). That is, as the plurality of first trimming knives 410 include n first trimming knives 410, the first free standing film F1 laminated on the current collector 10 may be cut into n/2 rows. For example, when there are four first trimming knives 410, the first free standing film F1, which passes by the first laminating roller 300 and is laminated onto the current collector 10, may be cut into two rows spaced apart in the second direction (Y). When the plurality of first trimming knives 410 include six first trimming knives 410, the first free standing film F1, which passes by the first laminating roller 300 and is laminated onto the current collector 10, may include three rows spaced apart in the second direction (Y).

The plurality of first trimming knives 410 are connected to the controller 900, and the position of each of the plurality of first trimming knives 410 in the second direction (Y) may be controlled by the controller 900. The plurality of first trimming knives 410 may include various known cutting means for cutting and trimming the first free standing film F1 passing by the first laminating roller 300. The plurality of first trimming knives 410 may be moved in the second direction (Y) on the first laminating roller 300 by various known moving means.

The first suction portion 510 is positioned at the rear end of the first direction (X) of the plurality of first trimming knives 410, and material cut and separated from the first free standing film F1 by the plurality of first trimming knives 410 may be suctioned by the first suction part 510.

Referring to FIG. 1, the second trimming knife 420 is disposed adjacent to the second laminating roller 800. The second trimming knife 420 may move in the second direction (Y) adjacent to the second laminating roller 800 and adjust a second film width in the second direction (Y) of the second free standing film F2 that passes by the second laminating roller 800 in the first direction (X).

The second trimming knife 420 includes a plurality of second trimming knives 420. The plurality of second trimming knives 420 may include knives of substantially the same shape and in the same number as the plurality of first trimming knives 410 described above, but the present disclosure is not limited thereto. For example, four second trimming knives 420 may be provided, two second trimming knives 420 may be provided, or six or more second trimming knives 420 may be provided. The plurality of second trimming knives 420 may include an even number of second trimming knives 420. The plurality of second trimming knives 420 includes n second trimming knives 420 spaced apart in the second direction (Y) that is the axial direction the second laminating roller 800. The second film width of the second free standing film F2 is adjusted by n second trimming knives 420 while the second free stand film F2 passes by the second laminating roller 800 into n/2 rows that are spaced apart in the second direction (Y). That is, as the plurality of second trimming knives 420 include n second trimming knives 420, the second free standing film F2 laminated onto the current collector 10 may be cut into n/2 rows. For example, when there are four second trimming knives 420, the second free standing film F2 laminated on the current collector 10 after by the second laminating roller 800 may include two rows spaced in the second direction (Y). When there are six second trimming knives 420, the second free standing film F2 laminated onto the current collector 10 after passing the second laminating roller 800 may include three rows spaced in the second direction (Y).

The plurality of second trimming knives 420 are connected to the controller 900, and the position in the second direction (Y) of each of the plurality of second trimming knives 420 may be controlled by the controller 900. The plurality of second trimming knives 420 may include various known cutting means that can cut and trim the second free standing film F2 passing by the second laminating roller 800. The plurality of second trimming knives 420 may move in the second direction (Y) on the second laminating roller 800 by various known moving means.

The second suction portion 520 is positioned at the rear end of the first direction (X) of the plurality of second trimming knives 420, and material cut and separated from the second free standing film F2 by the plurality of second trimming knives 420 may be suctioned by the second suction portion 520.

The first suction portion 510 is positioned adjacent to the plurality of first trimming knives 410. The first suction portion 510 may suction material separated from the first free standing film F1 by the plurality of first trimming knives 410. That is, the first suction portion 510 is positioned at the rear end in the first direction (X) from the plurality of first trimming knives 410 and may suction the material separated from the first free standing film F1 by the plurality of first trimming knives 410.

Referring to FIG. 2, for example, the first suction portion may include a plurality of first suction portions 510. Each of the first suction portions 510 may be positioned adjacent to one of the first trimming knives 410 and be positioned at the rear end of the first direction (X). The first suction portion 510 may include various known suction means. The material suctioned from the first suction portion 510 may be resupplied to the first feeder 110, but the present disclosure is not limited in this regard.

Referring to FIG. 1, the second suction portion 520 is positioned adjacent to the plurality of second trimming knives 420. The second suction portion 520 may suction material separated from the second free standing film F2 by the plurality of second trimming knives 420. That is the second suction portion 520 is disposed at the rear end in the first direction (X) from the plurality of second trimming knives 420 and may suction material separated from the second free standing film F2 by the plurality of second trimming knives 420.

The second suction portion 520 may include a plurality of second suction portions 520. Each of the plurality of second suction portions 520 may be disposed at the rear end of each of the plurality of second trimming knives 420 in the first direction (X) while being adjacent thereto. The second suction portion 520 may include various known suction means. The material suctioned from the second suction portion 520 may be resupplied to the second feeder 120, but the present disclosure is not limited in this regard.

The first vision portion 610 is disposed at the rear end of the first laminating roller 300 in the third direction (Z). The first vision portion 610 photographs a first side 11 of the current collector 10 onto which the first free standing film F1 is laminated. The first vision portion 610 may include various known imaging means, such as a camera. The first vision portion 610 is connected to the controller 900, and the image of the first surface 11 of the current collector 10 on which the first free standing film F1 is laminated may be captured by the first vision portion 610 and transmitted to the controller 900.

The second vision portion 620 is disposed at the rear end of the second laminating roller 800 in the third direction (Z). The second vision portion 620 photographs a second side 12 of the current collector 10 onto which the second free standing film F2 is laminated. The second vision portion 620 may include various known imaging means, such as a camera. The second vision portion 620 is connected to the controller 900, and the image of the second surface 12 of the current collector 10 on which the second free standing film F2 is laminated may be captured by the second vision portion 620 and transmitted to the controller 900.

The second roller includes a plurality of second rollers 700. The plurality of second rollers 700 calender the second fine powder P2 supplied from the second feeder 120 into the second free standing film F2. The plurality of second rollers 700 are arranged in the first direction (X), and the second fine powder P2 is supplied between the plurality of second rollers 700 and thus may be calendered into the second free standing film F2. For example, the plurality of second rollers 700 may calender the second fine power P2 into the second free standing film F2 by rolling and stretching second fine powder P2, but the present disclosure is not limited in this regard. Each of the plurality of second rollers 700 may rotate at the same angular speed or may rotate at different angular speeds. Moving in the first direction (X) toward the current collector 10, each of the plurality of second rollers 700 may rotate at a gradually faster angular speed or gradually at a slower angular speed. Among the plurality of first rollers 200, a second laminating roller 800 is disposed adjacent to the first roller 200, which is positioned at the end of one direction.

The second laminating roller 800 is disposed between the plurality of second rollers 700 and the first laminating roller 300. The second laminating roller 800 laminates the second free standing film F2 calendered by the plurality of second rollers 700 onto the second side 12 of the current collector 10. The second laminating roller 800 may include various known laminating means. The current collector 10 between the second laminating roller 800 and the first laminating roller 300 may move in the third direction (Z), which intersects the first direction (X) and the second direction (Y). As the current collector 10 moves in the third direction (Z) and passes between the first laminating roller 300 and the second laminating roller 800, the first free standing film F1 may be laminated onto the first side 11 and the second free standing film F2 may be laminated onto the second side 12.

The current collector 10 on which the first free standing film F1 and the second free standing film F2 are laminated may be wound by various known winding methods, but the present disclosure is not limited in this regard.

The first film width in the second direction (Y) of the first free standing film F1 laminated on the current collector 10 may be adjusted in real-time by the plurality of first trimming knives 410 controlled by the controller 900, and the second film width in the second direction (Y) of the second free standing film F2 laminated on the current collector 10 may be adjusted in real-time by the plurality of second trimming knives 420 controlled by the controller 900.

The controller 900 may be connected with the first vision portion 610, the second vision portion 620, the plurality of first trimming knives 410, and the plurality of second trimming knives 420. Thus, the controller 900 may control the plurality of first trimming knives 410 and the plurality of second trimming knives 420 based on the image of the first side 11 and the image of the second side 12 of the current collector 10 that are transmitted by the first vision portion 610 and the second vision portion 620. The controller 900 may control positions of the plurality of first trimming knives 410 in the second direction (Y) and positions of the plurality of second trimming knives 420 in the second direction (Y) based on the first film width in the second direction (Y) of the first free standing film F1 laminated on the first side of the current collector 10 and the second film width in the second direction (Y) of the second free standing film F2 laminated on the second side 12 of the current collector 10 by analyzing the image of the first side 11 and the image of the second side 12 transmitted from the first vision portion 610 and the second vision portion 620. As the controller 900 controls the positions of the plurality of first trimming knives 410 in the second direction (Y) and the positions of the plurality of second trimming knives 420 in the second direction (Y), the plurality of first trimming knives 410 may adjust the first film width in the second direction (Y) of the first free standing film F1 passing by the first laminating roller 300 in the first direction (X) and, at the same time, the plurality of second trimming knives 420 may adjust the second film width in the second direction (Y) of the second free standing film F2 passing by the second laminating roller 800 in the first direction (X).

For example, the controller 900 may control the positions of the plurality of first trimming knives 410 in the second direction (Y) based on a desired width of a first uncoated portion in the second direction (Y) of the current collector 10, with the first uncoated portion of the current collector 10 not being covered by the first free standing film F1. The controller 900 may control the positions of the plurality of second trimming knives 420 in the second direction (Y) based on a width of a second uncoated portion in the second direction (Y) of the current collector 10, with the second uncoated portion not being covered by the second free standing film F2. That is, the controller 900 may control the positions of the plurality of first trimming knives 410 in the second direction (Y) and the positions of the plurality of second trimming knives 420 in the second direction (Y) based on a desired width of a first uncoated portion in the second direction (Y) of the first side 11 of the current collector 10, the first film width in the second direction (Y) of the first free standing film F1 laminated onto the first side 11 of the current collector 10, a width of a second uncoated portion in the second direction (Y) of the second side 12 of the current collector 10, and the second film width in the second direction (Y) of the second free standing film F2 laminated onto the second side 12 of the current collector 10.

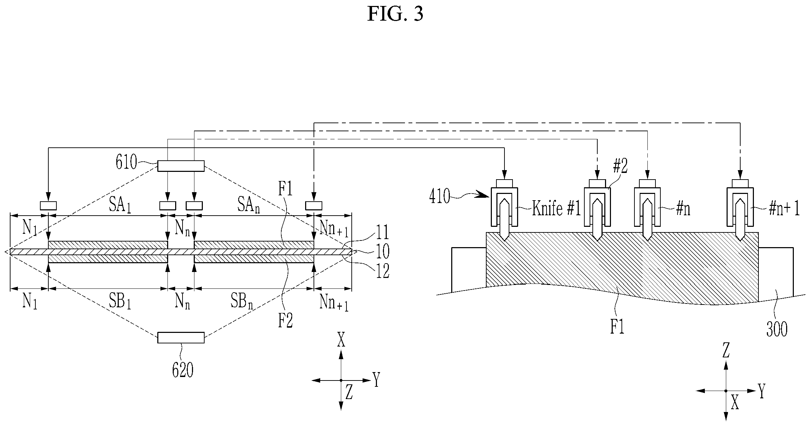

FIG. 3 shows an example of controlling the plurality of first trimming knives by the controller of the dry electrode manufacturing apparatus according to an embodiment.

Referring to FIG. 3, the first film width, position, and alignment state in the second direction (Y) of the first free standing film F1 laminated on the first side 11 of the current collector 10 may be photographed and measured through the first vision portion 610. The second film width, position, and alignment state in the second direction (Y) of the second free standing film F2 laminated on the second surface 12 of the current collector 10 may be photographed and measured through the second vision portion 620. The photographic data is transmitted to the controller 900, and the controller 900 may simultaneously control the position of the plurality of first trimming knives 410 in the second direction (Y) and the position of the plurality of second trimming knives 420 in the second direction (Y) based on the photographic data.

For example, when one directional electrode tab to be formed in the current collector 10 has a width N₁ of a first uncoated portion and a width N₁ of a second uncoated portion, data measured by the first vision portion 610 and the second vision portion 620 is fed back to the controller, and the controller determines a moving amount of a first knife among the plurality of first trimming knives 410 in the second direction (Y) and controls the position of the first knife in the second direction (Y), thereby controlling a width of N₁ (i.e., the width of the first and second uncoated portions). The controller 900 may control the position of any of knives based on corresponding width data N₁ to Nₙ for the knives. The position of the second free standing film F2 disposed on the second side 12 of the current collector 10 may be controlled by the controller 900 based on a difference between the first free standing film F1 disposed on the first side 11 and the second free standing film F2 disposed on the second side 12. The controller 900 may control the positions of the knives by calculating SA₁-SB₁ and SAₙ-SBₙ, which is a position difference of the second free standing film F2 based on the position of the first free standing film F1. SA₁ and SAₙ, which is the first film width of the first free standing film F1, may be controlled by controlling the position of a second knife and further knives, which are the first trimming knives 410, in the second direction (Y) by receiving data of SA₁ and SAₙ from the first vision portion 610. SB₁ and SBₙ, which is the second film width of the second free standing film F2, may be controlled by controlling the position of the second trimming knife 420 in the second direction (Y) by receiving data of SB₁ and SBₙ from the second vision portion 620.

As another example, when one directional electrode tab to be formed in the current collector 10 has a width Nₙ₊₁ for the first uncoated portion width and the second uncoated portion width, the controller may control a position of a corresponding knife among the first trimming knives 410 based on data for Nₙ₊₁ of the first side 11 of the current collector 10 and may control a position of a second knife among the first trimming knives 410 based on data for Nₙ₊₁ to Nₙ. The controller may control the positions of the knives based on SAₙ₊₁-SBₙ₊₁ and SA₂-SB₂, which is a position difference of the second free standing film F2 based on the position of the first free standing film F1. SAₙ and SA₁, which is the first film width of the first free standing film F1 may be controlled by the controller that receives data of SAₙ and SA₁ from the first vision portion 610 and controls the positions of knives included in the first trimming knives 410 in the second direction (Y). SBₙ and SB₁, the second film width of the second free standing film F2, may be controlled by the controller receiving data of SBₙ and SB₁ from the second vision portion 620 and controlling the position of the second trimming knifes in the second direction (Y).

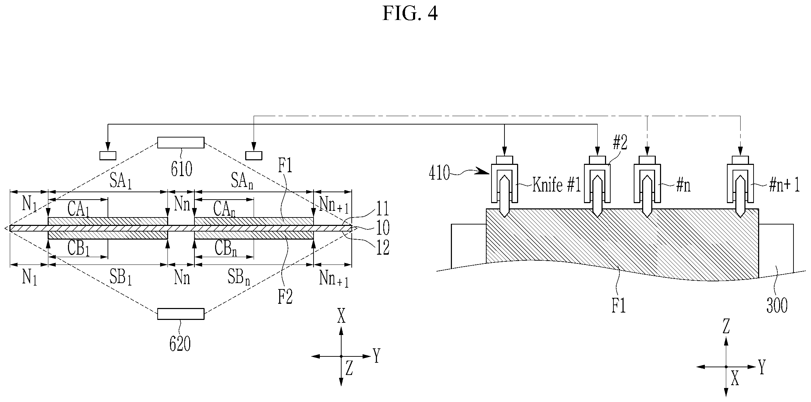

FIG. 4 shows an example of the controller that controls the plurality of first trimming knives of the dry electrode manufacturing apparatus according to an embodiment of the present disclosure.

Referring to FIG. 4, as another example, when a bi-directional electrode tab is to be formed on the current collector 10, the controller may obtain CA₁, which is a central position value of the first side 11 by measuring data of N₁ and SA₁ through the first vision portion 610 and the second vision portion 620 and calculating the data (N₁+ (SA₁/2)), and may obtain a required central position value correction amount (ΔC) by comparing the calculated value with the central position value. In addition, the controller may obtain a width value correction amount (ΔW) by comparing currently measured film width data with SA₁, which is a predetermined film width value.

For example, assuming that among the first trimming knives 410, a second knife position value uses a coordinate system that is larger than the first knife position, the controller may calculate +ΔW in the position correction amount of the second knife if the central position value correction amount is positive (+), and may calculate -ΔW in the position correction amount of first knife if the central position value correction amount is negative (-). The controller may obtain the final correction amount of the first and second knives by adding twice ΔC to the position correction amount of each knife, and the controller may control through the final correction amount. When ΔC is 0, the controller may control the position of the knives by subtracting and adding ΔW/2 from or to each of the first and second knives. In the case of n rows, the controller obtains the central position value and width value correction amount from N₁ to Nₙ and SAₙ width data using the same method and controls the positions of the knives, thereby controlling the film width and position of the first free standing film F1.

For alignment of the first free standing film F1 and the second free standing film F2 disposed on the first side 11 and second side 12, respectively, the controller operates SAₙ-SBₙ, which is a position difference of the position of the first free standing film F1 disposed on the first side 11 and the position of the second free standing film F2 disposed on the second side 12, and controls the position of the second trimming knives 420 based on the operation result.

In the dry electrode manufacturing apparatus 1000 according to an embodiment, the controller 900 controls the positions of the first trimming knives 410 in the second direction (Y) and the positions of the second trimming knives 420 in the second direction (Y) based on the first film width of the first free standing film F1 and the second film width of the second free standing film F2 laminated onto the current collector 10 in real-time such that the first trimming knives 410 may adjust the first film width in the second direction (Y) of the first free standing film F1 passing by the first laminating roller 300 in the first direction (X) in real-time. At the same time, the second trimming knives 420 may adjust the second film width in the second direction (Y) of the second free standing film F2 passing by the second laminating roller 800 in the first direction (X). Thus, the dry electrode manufacturing apparatus 1000 may improve the quality of the dry electrode by controlling the width, position, or alignment of the free standing film laminated on the current collector 10 in real-time and at the same time improve the stability of the dry electrode manufacturing process.

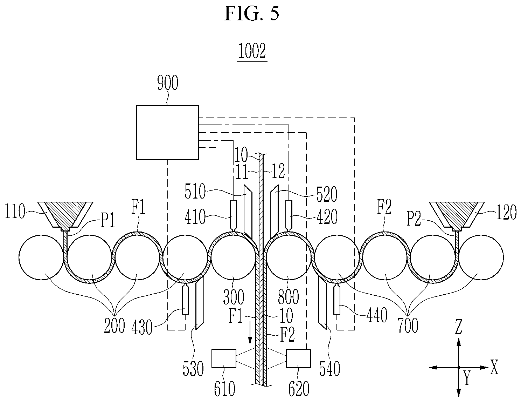

Hereinafter, referring to FIG. 5, a dry electrode manufacturing apparatus according to another embodiment will be described. In particular, parts that are different from the dry electrode manufacturing apparatus according to the above-described embodiment will be described.

FIG. 5 is a side view of a dry electrode manufacturing apparatus according to another embodiment.

Referring to FIG. 5, a dry electrode manufacturing apparatus 1002 according to another embodiment includes a first feeder 110, a second feeder 120, a first roller 200, a first laminating roller 300, a first trimming knife 410, a second trimming knife 420, a third trimming knife 430, a fourth trimming knife 440, a first suction portion 510, a second suction portion 520, a third suction portion 530, a fourth suction portion 540, a first vision portion 610, a second vision portion 620, a second roller 700, a second laminating roller 800, and a controller 900.

The third trimming knife 430 may be disposed adjacent to a first roller 200, which is one of the plurality of first rollers 200. The third trimming knife 430 may be disposed adjacent to the first roller 200 that neighbors a first laminating roller 300 among the plurality of first rollers 200. The third trimming knife 430 may be positioned adjacent to the first roller 200, which is disposed at the end of the first direction (X) among the plurality of first rollers 200. The third trimming knife 430 may move in the second direction (Y) relative to the first roller 200 and adjust a first film width in the second direction (Y) of the first free standing film F1 that passes by the first roller 200 in the first direction (X). The third trimming knife 430 includes a plurality of third trimming knives 430. The plurality of third trimming knives 430 may include knives of substantially the same form and the same number as the plurality of first trimming knives 410 described above. But this is not limited in this regard, and the plurality of third trimming knives 430 may include knives of different shapes and numbers than the plurality of first trimming knives 410 described above.

The plurality of third trimming knives 430 are connected to the controller 900, and a position of each of the plurality of third trimming knives 430 in the second direction (Y) may be controlled by the controller 900. The plurality of third trimming knives 430 may include various known cutting means for cutting and trimming the first free standing film F1 passing by the first roller 200. The plurality of third trimming knives 430 may move in the second direction (Y) on the first roller 200 by various known moving means. The third suction portion 530 is disposed at the rear end of the first direction (X) of the plurality of third trimming knives 430, and material cut and separated from the first free standing film F1 by the plurality of third trimming knives 430 may be suctioned by the third suction portion 530.

The fourth trimming knife 440 may be disposed adjacent to a second roller 700 among the plurality of second rollers 700. The fourth trimming knife 440 may be disposed adjacent to the second roller 700 that neighbors the second laminating roller 800 among the plurality of second rollers 700. The fourth trimming knife 440 may be positioned adjacent to the second roller 700 that is positioned at the last end of the first direction (X) among the plurality of second rollers 700. The fourth trimming knife 440 may move in the second direction (Y) relative to the second roller 700 and adjust a second film width in the second direction (Y) of the second free standing film F2 that passes by the second roller 700 in the first direction (X). The fourth trimming knife 440 includes a plurality of fourth trimming knives 440. The plurality of fourth trimming knives 440 may include knives of substantially the same form and the same number as the plurality of second trimming knives 420 described above. But the present disclosure is not limited in this regard, and the plurality of fourth trimming knives 440 may include knives of different shapes and numbers than the plurality of second trimming knives 420 described above.

The plurality of fourth trimming knives 440 are connected to the controller 900, and a position of each of the plurality of fourth trimming knives 440 in the second direction (Y) may be controlled by the controller 900. The plurality of fourth trimming knives 440 may include various known cutting means for cutting and trimming the second free standing film F2 passing through the second roller 700. The plurality of fourth trimming knives 440 may move in the second direction (Y) by various known moving means. The fourth suction portion 540 is disposed at the rear end of the first direction (X) of the plurality of fourth trimming knives 440, and material cut and separated from the second free standing film F2 by the plurality of fourth trimming knives 440 may be suctioned by the fourth suction portion 540.

The third suction portion 530 is adjacent to the plurality of third trimming knives 430. The third suction portion 530 may suction material separated from the first free standing film F1 by the plurality of third trimming knives 430. That is, the third suction portion 530 is disposed at the rear end in the first direction (X) from the plurality of third trimming knives 430 and may suction material separated from the first free standing film F1 by the plurality of third trimming knives 430. The third suction portion may include a plurality of third suction portions 530. Each of the third suction portions 530 may be positioned at the rear end of one of third trimming knives 430 in the first direction (X) while being adjacent thereto. The third suction portion 530 may include various known suction means. The material suctioned from the third suction portion 530 may be resupplied to the first feeder 110, but the present disclosure is not limited in this regard.

The fourth suction portion 540 neighbors the plurality of fourth trimming knives 440. The fourth suction portion 540 may suction material separated from the second free standing film F2 by the plurality of fourth trimming knives 440. That is, the fourth suction portion 540 is positioned at the rear end in the first direction (X) from the plurality of fourth trimming knives 440 and may suction material separated from the first free standing film F1 by the plurality of fourth trimming knives 440. The fourth suction portion 540 may include a plurality of fourth suction portions 540. Each of the fourth suction portions 540 may be disposed at the rear end of one of the fourth trimming knives 440 while being adjacent thereto. The fourth suction portion 540 may include various known suction means. The material suctioned by the fourth suction portion 540 may be resupplied to the second feeder 120, but the disclosure is not limited in this regard.

The controller 900 may be connected to the first vision portion 610, the second vision portion 620, the plurality of first trimming knives 410, the plurality of second trimming knives 420, the plurality of third trimming knives 430, and the plurality of fourth trimming knives 440. Thus, the controller 900 may control the first trimming knives 410, the second trimming knives 420, the third trimming knives 430, and the fourth trimming knives 440 based on the image of the first side 11 and the image of the second side 12 of the current collector 10 transmitted from the first vision portion 610 and the second vision portion 620. The controller 900 may control positions of the first trimming knives 410 in the second direction (Y), positions of the second trimming knives 420 in the second direction (Y), positions of the third trimming knives 430 in the second direction (Y), and positions of the fourth trimming knives 440 in the second direction (Y) based on the first film width in the second direction (Y) of the first free standing film F1 laminated on the first side of the current collector 10 and the second film width in the second direction (Y) of the second free standing film F2 laminated on the second side 12 of the current collector 10 by analyzing the image of the first side 11 and the image of the second side 12 transmitted from the first vision portion 610 and the second vision portion 620. As the controller 900 controls the positions of the first trimming knives 410, the second trimming knives 420, the third trimming knives 430, and the fourth trimming knives 440 in the second direction (Y), the first trimming knives 410 and the third trimming knives 430 may adjust the first film width in the second direction (Y) of the first free standing film F1 passing by the first laminating roller 300 and the first roller 200 in the first direction (X). At the same time, the second trimming knives 420 and the fourth trimming knives 440 may adjust the second film width in the second direction (Y) of the second free standing film F2 passing by the second laminating roller 800 and the second roller 700 in the first direction (X).

The controller 900 may control the positions of the first trimming knives 410 and the third trimming knives 430 in the second direction (Y) based on a width of a first uncoated portion in the second direction (Y) of the current collector 10, which does not include the first free standing film F1, and the first film width in the second direction (Y) of the first free standing film F1 laminated on the current collector 10. The controller 900 may control the positions of the second trimming knives 420 and the fourth trimming knives 440 in the second direction (Y) based on a width of a second uncoated portion in the second direction (Y) of the current collector 10, which does not include the second free standing film F2, and the second film width in the second direction (Y) of the first free standing film F1 laminated on the current collector 10. The controller 900 may control the positions of the first trimming knives 410 in the second direction (Y) adjacent to the first laminating roller 300, the positions of the third trimming knives 430 in the second direction (Y) adjacent to the first roller 200, the positions of the second trimming knives 420 in the second direction (Y) adjacent to the second laminating roller 800, and the positions of the plurality of fourth trimming knives 440 adjacent to the second roller 700 based on the a width of a first uncoated portion in the second direction (Y) of the first side 11 of the current collector 10, which does not include the first free standing film F1, the first film width in the second direction (Y) of the first free standing film F1 laminated on the first side 11 of the current collector 10, a width of a second uncoated portion in the second direction (Y) of the second side 12 of the current collector 10, which does not include the second free standing film F2, and the second film width in the second direction (Y) of the second free standing film F2 laminated on the second side 12 of the current collector 10.

In the dry electrode manufacturing apparatus 1002, the controller 900 controls the positions of the first trimming knives 410, the second trimming knives 420, the third trimming knives 430, and the fourth trimming knives 440 in the second direction (Y) in real-time based on the first film width of the first free standing film F1 and the second film width of the second free standing film F2 laminated onto the current collector 10 such that the first trimming knives 410 and the third trimming knives 430 may adjust the first film width in the second direction (Y) of the first free standing film F1 that passes by the first laminating roller 300 and the first roller 200 in the first direction (X) in real-time and, at the same time, the second trimming knives 420 and the fourth trimming knives 440 may adjust the second film width in the second direction (Y) of the second free standing film F2 passing by the second laminating roller 800 and the second roller 700 in the first direction (X) in real-time. The dry electrode manufacturing apparatus 1002 may thereby improve the quality of the dry electrode by controlling the width, position, or alignment of the free standing film laminated onto the current collector 10 in real-time and, at the same time, may improve the stability of the dry electrode manufacturing process.

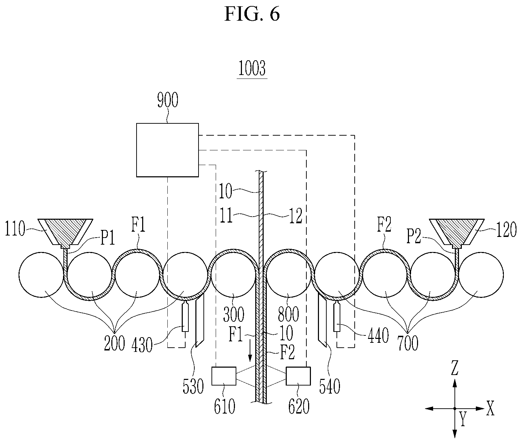

Hereinafter, referring to FIG. 6, a dry electrode manufacturing apparatus according to another embodiment will be described. Parts that are different from the dry electrode manufacturing apparatus according to the above-described embodiments will be described.

FIG. 6 is a side view of a dry electrode manufacturing apparatus according to another embodiment.

Referring to FIG. 6, a dry electrode manufacturing apparatus 1003 according to another embodiment includes a first feeder 110, a second feeder 120, a first roller 200, a first laminating roller 300, a third trimming knife 430, a fourth trimming knife 440, a third suction portion 530, a fourth suction portion 540, a first vision portion 610, a second vision portion 620, a second roller 700, a second laminating roller 800, and a controller 900.

The third trimming knife 430 may be disposed adjacent to one first roller 200 among a plurality of first rollers 200. The third trimming knife 430 may be disposed adjacent to a first roller 200 that neighbors the first laminating roller 300 among the plurality of first rollers 200. The third trimming knife 430 may be disposed adjacent to a first roller 200, which is disposed at the last end of the first direction (X) among the plurality of first rollers 200. The third trimming knife 430 may move in the second direction (Y) relative to the first roller 200 and adjust a first film width in the second direction (Y) of the first free standing film F1 that passes by the first roller 200 in the first direction (X). The third trimming knife includes a plurality of third trimming knives 430.

The plurality of third trimming knives 430 include four third trimming knives 430, may include two third trimming knives 430, or may include six or more third trimming knives 430. The plurality of third trimming knives 430 may include an even number of third trimming knives 430. The plurality of third trimming knives 430 includes n third trimming knives 430 spaced apart in the second direction (Y), and the first free standing film F1, of which the first film width is adjusted by the n third trimming knives 430 while passing by the first roller 200, may include n/2 rows spaced apart in the second direction (Y). Since the plurality of third trimming knives 430 include n third trimming knives 430, the first free standing film F1 laminated on the current collector 10 may be cut into n/2 rows.

For example, when four third trimming knives 430 are provided, the first free standing film F1 passed through the first roller 200 and laminated onto the current collector 10 may include two rows spaced apart in the second direction (Y). When the plurality of third trimming knives 430 includes six third trimming knives 430, the first free standing film F1 passed by the second roller 700 and laminated onto the current collector 10 may include three rows spaced apart in the second direction (Y).

The plurality of third trimming knives 430 are connected to the controller 900, and the position of each of the third trimming knives 430 in the second direction (Y) may be controlled by the controller 900. The plurality of third trimming knives 430 may include various known cutting means for cutting and trimming the first free standing film F1 passing through the first roller 200. The plurality of third trimming knives 430 may move in the second direction (Y) on the first roller 200 by various known moving means. The third suction portion 530 is disposed at the rear end of the first direction (X) of the plurality of third trimming knives 430, and material cut and separated from the first free standing film F1 by the plurality of third trimming knives 430 may be suctioned by the third suction portion 530.

The fourth trimming knife 440 may be disposed adjacent to the second roller 700 among a plurality of second rollers 700. In particular, the fourth trimming knife 440 may be disposed adjacent to a second roller 700 that is adjacent to the second laminating roller 800 among the plurality of second rollers 700. The fourth trimming knife 440 may be disposed adjacent to a second roller 700 that is disposed at the last end of the first direction (X) among the plurality of second rollers 700. The fourth trimming knife 440 may move in the second direction (Y) relative to the second roller 700 and adjust a second film width in the second direction (Y) of the second free standing film F2 that passes by the second roller 700 in the first direction (X). The fourth trimming knife includes a plurality of fourth trimming knives 440.

The plurality of fourth trimming knives may include four fourth trimming knives 440, but this is not restrictive, two fourth trimming knives 440, or six or more fourth trimming knives 440. The plurality of fourth trimming knives 440 may include an even number of fourth trimming knives 440. The plurality of fourth trimming knives 440 include n fourth trimming knives 440 that are spaced apart in the second direction (Y) , and the second free standing film F2 adjusted by the n fourth trimming knives 440 while passing by the second roller 700 may include n/2 rows spaced apart in the second direction (Y). That is, as the plurality of fourth trimming knives 440 include n fourth trimming knives 440, the second free standing film F2 laminated on the current collector 10 may include n/2 rows.

For example, when plurality of fourth trimming knives 440 include four fourth trimming knives 440, the second free standing film F2 passed by the second roller 700 and laminated onto the current collector 10 may include two rows spaced apart in the second direction (Y). When the plurality of fourth trimming knives 440 include six fourth trimming knives 440, the second free standing film F2 passed by the second roller 700 and laminated onto the current collector 10 may include three rows spaced apart in the second direction (Y).

The plurality of fourth trimming knives 440 are connected to the controller 900, and a position of each of the fourth trimming knives 440 in the second direction (Y) may be controlled by the controller 900. The plurality of fourth trimming knives 440 may include various known cutting means for cutting and trimming the second free standing film F2 passing through the second roller 700. The plurality of fourth trimming knives 440 may move in the second direction (Y) relative to the second roller 700 by various known moving means. The fourth suction portion 540 is disposed at the rear end of the first direction (X) of the plurality of fourth trimming knives 440, and material cut and separated from the second free standing film F2 by the plurality of fourth trimming knives 440 may be suctioned by the fourth suction portion 540.

The third suction portion 530 neighbors the plurality of third trimming knives 430. The third suction portion 530 may suction material separated from the first free standing film F1 by the plurality of third trimming knives 430. The third suction portion 530 is disposed at the rear end in the first direction (X) from the plurality of third trimming knives 430 and may suction material separated from the first free standing film F1 by the plurality of third trimming knives 430.

The third suction portion may include a plurality of third suction portions 530. Each of the plurality of third suction portions 530 may be positioned at the rear end of each of the plurality of third trimming knives 430 in the first direction (X) while being adjacent thereto. The third suction portion 530 may include various known suction means. The material suctioned from the third suction portion 530 may be resupplied to the first feeder 110, but the present disclosure is not limited in this regard.

The fourth suction portion 540 neighbors the plurality of fourth trimming knives 440. The fourth suction portion 540 may suction material separated from the second free standing film F2 by the plurality of fourth trimming knives 440. The fourth suction portion 540 is positioned at the rear end in the first direction (X) from the plurality of fourth trimming knives 440 and may suction material separated from the first free standing film F1 by the plurality of fourth trimming knives 440.

The fourth suction portion may include a plurality of fourth suction portions 540. The plurality of fourth suction portions 540 each may be disposed at the rear end of each of the fourth trimming knives 440 while being adjacent thereto. The fourth suction portion 540 may include various known suction means. The material suctioned by the fourth suction portion 540 may be resupplied to the second feeder 120, but the present disclosure is not limited in this regard.

The controller 900 may be connected to the first vision portion 610, the second vision portion 620, the plurality of third trimming knives 430, and the plurality of fourth trimming knives 440. Thus, the controller may control the plurality of third trimming knives 430 and the plurality of fourth trimming knives 440 based on the images of the first side 11 and the second side 12 of the current collector 10 that are transmitted by the first vision portion 610 and the second vision portion 620. The controller 900 may control positions of the third trimming knives 430 in the second direction (Y) and positions of the fourth trimming knives 440 in the second direction (Y) based on the first film width in the second direction (Y) of the first free standing film F1 laminated onto the first side of the current collector 10 and the second film width in the second direction (Y) of the second free standing film F2 laminated on the second side 12 of the current collector 10 by analyzing the images of the first side 11 and the second side 12 transmitted by the first and second vision portions 610 and 620. As the controller 900 controls the positions of the third trimming knives 430 and the fourth trimming knives 440 in the second direction (Y), the plurality of third trimming knives 430 may adjust the first film width in the second direction (Y) of the first standing film F1 passing by the first roller 200 in the first direction (X) and, at the same time, the plurality of fourth trimming knives 440 may adjust the second film width in the second direction (Y) of the second free standing film F2 passing by the second roller 700 in the first direction (X).

For example, the controller 900 may control the positions of the third trimming knives 430 in the second direction (Y) based on a width of a first uncoated portion in the second direction (Y) of the current collector 10 and the first film width in the second direction (Y) of the first free standing film F1 laminated onto the current collector 10. The controller 900 may control the positions of the fourth trimming knives 440 in the second direction (Y) based on a width of a second uncoated portion in the second direction (Y) of the current collector 10 and the second film width in the second direction (Y) of the first free standing film F1 laminated onto the current collector 10. The controller 900 may control the position of the third trimming knives 430 in the second direction (Y) on the first roller 200 and the position of the fourth trimming knives 440 in the second direction (Y) on the second roller 700 based on a width of a first uncoated portion in the second direction (Y) of the first side 11 of the current collector 10, the first film width in the second direction (Y) of the first free standing film F1 laminated onto the first side 11 of the current collector 10, a width of a second uncoated portion in the second direction (Y) of the second side 12 of the current collector 10, and the second film width in the second direction (Y) of the second free standing film F2 laminated onto the second side 12 of the current collector 10.

In the dry electrode manufacturing apparatus 1003, the controller 900 controls the positions of the third trimming knives 430 and the fourth trimming knives 440 in real-time based on the first film width of the first free standing film F1 and the second film width of the second free standing film F2 laminated onto the current collector 10 such that the plurality of third trimming knives 430 may adjust the first film width in the second direction (Y) of the first free standing film F1 that passes by the first roller 200 in the first direction (X) in real-time and, at the same time, the fourth trimming knives 440 adjust the second film width in the second direction (Y) of the second free standing film F2 passing by the second roller 700 in the first direction (X) in real-time.

The dry electrode manufacturing apparatus 1003 improves the quality of the dry electrode by controlling the width, position, or alignment of the free standing film laminated onto the current collector 10 in real-time and, at the same time, improves the stability of the dry electrode manufacturing process.

While this disclosure has been described in connection with practical embodiments, it is to be understood that the disclosure is not limited to the disclosed embodiments. On the contrary, it is intended to cover various modifications and equivalent arrangements all within the scope of the claims as appended hereto.

### <Description of symbols>

first roller 200, first laminating roller 300, first trimming knife 410, first vision portion 610, controller 900

## Claims

1. A dry electrode manufacturing apparatus comprising:
a plurality of first rollers configured to calender a first fine powder into a first free standing film;
a first laminating roller positioned adjacent to the plurality of first rollers in a first direction and configured to laminate the first free standing film onto a first side of a current collector;
a plurality of first trimming knives that are moveable in a second direction crossing the first direction and configured to adjust a first film width in the second direction of the first free standing film that passes by the first laminating roller in the first direction;
a first vision portion that photographs the first side of the current collector, on which the first free standing film is laminated; and
a controller that is connected with the first vision portion and the first trimming knives, and the controller being configured to control positions of the first trimming knives in the second direction based on the film width of the first free standing film laminated onto the first side of the current collector.

2. The dry electrode manufacturing apparatus of claim 1, wherein the plurality of first trimming knives comprise n first trimming knives spaced apart in the second direction, and
wherein the first trimming knives are configured to cut the first free standing film into n/2 rows spaced apart in the second direction, and optionally wherein the plurality of first trimming knives includes four trimming knives.

3. The dry electrode manufacturing apparatus of claim 1 or claim 2, wherein the controller controls positions of the first trimming knives in the second direction based on a width of an uncoated portion in the second direction of the current collector, which is not provided with the first free standing film, and the width of the first free standing film.

4. The dry electrode manufacturing apparatus of any one of the preceding claims, further comprising a first suction portion positioned adjacent to the first trimming knives, and is configured to suction material separated from the first free standing film by the first trimming knives, and optionally wherein the first suction portion is disposed at a rear end in the first direction from the plurality of first trimming knives.

5. The dry electrode manufacturing apparatus of any one of the preceding claims, further comprising a first feeder configured to supply the fine powder to the plurality of first rollers.

6. The dry electrode manufacturing apparatus of any one of the preceding claims, wherein the dry electrode apparatus further comprises:
a plurality of second rollers configured to calender a second fine powder into a second free standing film;
a second laminating roller positioned between the plurality of second rollers and the first laminating roller and configured to laminate the second free standing film onto a second side of the current collector;
a plurality of second trimming knives that are moveable in the second direction and are configured to adjust a second film width in the second direction of the second free standing film passing by the second laminating roller in the first direction; and
a second vision portion that photographs the second side of the current collector on which the second free standing film is laminated, and
wherein the controller is connected to the second vision portion and the second trimming knives, the controller being configured to control positions of the second trimming knives in the second direction based on the second film width of the second free standing film laminated onto the second side of the current collector.

7. The dry electrode manufacturing apparatus of claim 6, wherein the controller is configured to control positions of the first trimming knives in the second direction and positions of the second trimming knives in the second direction based on a first uncoated portion width in the second direction of the current collector, the first uncoated portion not being provided with the first free standing film, the first film width, a second uncoated portion width in the second direction of the current collector, the second uncoated portion not being provided with the second free standing film, and the second film width.

8. The dry electrode manufacturing apparatus of claim 6 or claim 7, further comprising a second suction portion that is positioned adjacent to the second trimming knives and is configured to suction material separated from the second free standing film by the second trimming knives, and optionally wherein the second suction portion is positioned at a rear end in the first direction from the plurality of second trimming knives.

9. The dry electrode manufacturing apparatus of any one of claims 6 to 8, further comprising a plurality of third trimming knives that are moveable in the second direction adjacent to a roller that is adjacent to the first laminating roller among the plurality of first rollers, the third trimming knives being configured to adjust the first film width in the second direction of the first free standing film passing by the roller in the first direction, and optionally wherein the controller is connected to the plurality of third trimming knives and configured to control positions of the third trimming knives in the second direction based on the first film width of the first free standing film laminated on the first side of the current collector.

10. The dry electrode manufacturing apparatus of claim 9, further comprising a third suction portion that is positioned adjacent to third trimming knives and is configured to suction material separated from the first free standing film by the third trimming knives, and optionally wherein the third suction portion is positioned at the rear end in the first direction from the plurality of third trimming knives between the plurality of third trimming knives and the plurality of first trimming knives.

11. The dry electrode manufacturing apparatus of claim 9 or claim 10, further comprising a plurality of fourth trimming knives that are moveable in the second direction adjacent to a second roller that is adjacent to the second laminating roller among the plurality of second rollers, the fourth trimming knives being configured to adjust the second film width in the second direction of the second free standing film passing by the second roller in the first direction.

12. The dry electrode manufacturing apparatus of claim 11, wherein the controller is connected to the plurality of fourth trimming knives and is configured to control positions of the fourth trimming knives in the second direction based on the second film width of the second free standing film laminated onto the second side of the current collector.

13. The dry electrode manufacturing apparatus of claim 11 or claim 12, further comprising a fourth suction portion that is positioned adjacent to the fourth trimming knives and is configured to suction material separated from the second free standing film by the fourth trimming knives.

14. The dry electrode manufacturing apparatus of any one of the preceding claims, when dependent upon claims 6, wherein the dry electrode apparatus further comprises a second feeder configured to supply the second fine powder to the plurality of second rollers.

15. A dry electrode manufacturing apparatus comprising:
a plurality of rollers arranged in a first direction and configured to laminate fine powder by calendaring the fine power into a free standing film;
a plurality of trimming knives that are moveable in a second direction crossing the first direction, the plurality of trimming knives being configured to adjust a film width in the second direction of the free standing film passing by the roller in the first direction;
a vision portion configured to photograph a surface of the current collector on which the free standing film is laminated; and
a controller that is connected to the vision portion and the plurality of trimming knives, the controller being configured to control positions of the trimming knives in the second direction based on a film width of the free standing film laminated onto the surface of the current collector.
